# EUROPEAN PATENT APPLICATION

(11) **EP 4 489 352 A1**
(43) Date of publication of application: **08.01.2025**
(21) Application number: 22941770.4
(22) Date of filing: 11.05.2022
(51) Int. Cl.: H04L 12/28, H04W 12/06, H04L 67/303, H04W 84/12

(54) **METHOD AND DEVICE FOR REGISTERING HOME APPLIANCE DEVICE IN WIRELESS COMMUNICATION SYSTEM**

(71) Applicant: LG Electronics Inc., Yeongdeungpo-gu Seoul 07336 (KR)
(72) Inventor: LEE, Suhwan, Seoul 08592 (KR); KIM, Jaehun, Seoul 08592 (KR); LEE, Cheolsook, Seoul 08592 (KR); LEE, Sangmi, Seoul 08592 (KR); PARK, Minkyu, Seoul 08592 (KR)
(74) Representative: Vossius & Partner Patentanwälte Rechtsanwälte mbB
(86) International application number: PCT/KR2022/006767
(87) International publication number: WO 2023/219183

(57) **Abstract**

**Abstract:** One embodiment relates to a home appliance device, comprising: a communication unit that receives a router network profile and information related to the number of devices to be registered from a mobile terminal on which an application is installed; and a controller that controls transmission of information instructing at least one first home appliance device to act as a bridge host and the router network profile to the at least one first home appliance device, and controls transmission of information instructing at least one second home appliance device to act as a bridge guest and transmission of the network profile of the bridge host to at least one second home appliance device, wherein the communication unit comprises a WiFi Bluetooth Low Energy (BLE) device that transmits and receives signals on the basis of a BLE concurrency function among the home appliance device, the mobile terminal, the at least one first home appliance device, and the at least one second home appliance device, the router network profile is used when the at least one first home appliance device connects to the router, and the bridge host network profile is used when the at least one second home appliance device connects to the bridge host.

## Description

### [Technical Field]

The following description relates to a method and device for registering multiple home appliance devices at once.

### [Background Art]

Recently, with the popularization of mobile terminals such as smartphones and the development of IoT (Internet of Things) technology, home appliances with communication functions have rapidly come into widespread use.

Home appliances with communication functions may be connected to a server or a mobile terminal through an access point (AP) such as a router in a home. In addition, a user may conveniently check the status of a home appliance through a mobile terminal and remotely control the operation of the home appliance. Furthermore, a user may easily perform device registration for a home appliance through a mobile terminal.

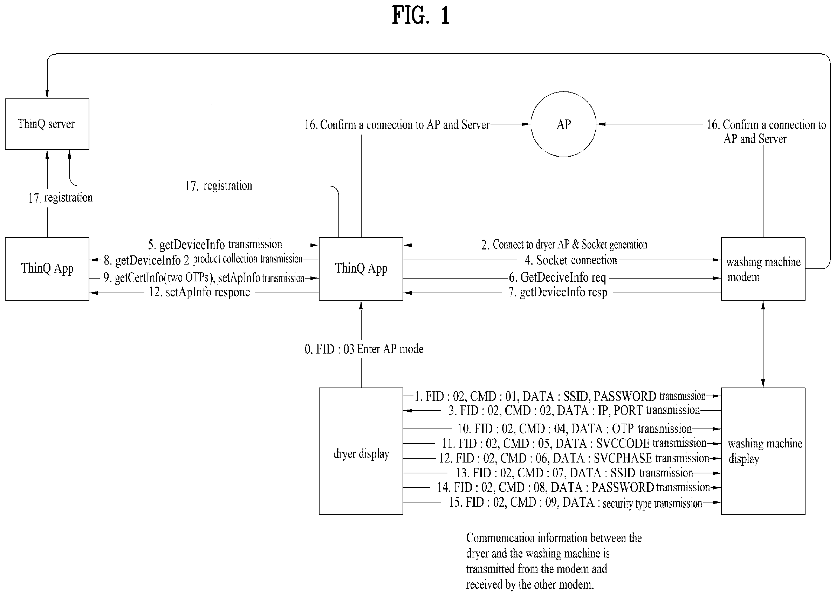

A conventional method for registering a home appliance with a server has been configured to receive main information of the device through device-to-device wired communication. For example, as illustrated in FIG. 1, in order to simultaneously register devices such as wash towers, the conventional method may receive the main information of the devices through device-to-device wired communication, and up to two devices can be registered simultaneously in the server. However, this conventional method has the problem that registration is not possible without a wired connection between devices due to transmission of main information via wired connection, and both devices are included as the number of STAs (stations) in the router, so that performance of the router may be problematic.

### [Disclosure]

### [Technical Problem]

An object of the present disclosure is to provide a method and device for collectively registering multiple home appliance devices based on grouping and Bluetooth low energy (BLE) concurrency.

### [Technical Solutions]

In accordance with an aspect of the present disclosure, a home appliance device may include: a communication unit configured to receive information related to an access point (AP) network profile and information related to the number of devices to be registered from a mobile terminal in which an application is installed; and a controller configured to transmit information instructing at least one first home appliance device to act as a bridge host and the access point (AP) network profile to the at least one first home appliance device, and to transmit information instructing at least one second home appliance device to act as a bridge guest and the bridge host network profile to the at least one second home appliance device, wherein the communication unit includes a Wi-Fi Bluetooth low energy (BLE) device configured to process signal communication based on a BLE concurrency function among the home appliance device, the mobile terminal, the at least one first home appliance device, and the at least one second home appliance device; and the access point (AP) network profile is used when the at least one first home appliance device is connected to the access point (AP), and the bridge host network profile is used when the at least one second home appliance device is connected to the bridge host.

In accordance with another aspect of the present disclosure, a method for registering a home appliance device may include: receiving information related to an access point (AP) network profile and information related to the number of devices to be registered from a mobile terminal in which an application is installed; and transmitting information instructing at least one first home appliance device to act as a bridge host and the access point (AP) network profile; and transmit information instructing at least one second home appliance device to act as a bridge guest and the bridge host network profile to the at least one second home appliance device, wherein a Wi-Fi Bluetooth low energy (BLE) device of the home appliance device is configured to process signal communication based on a BLE concurrency function among the home appliance device, the mobile terminal, the at least one first home appliance device, and the at least one second home appliance device; and the access point (AP) network profile is used when the at least one first home appliance device is connected to the access point (AP), and the bridge host network profile is used when the at least one second home appliance device is connected to the bridge host.

The controller may receive a device information request from the mobile terminal, may check the number of registrable devices that can be registered, may transmit information related to the number of devices that can be registered and information related to the home appliance device, and may perform an authentication procedure.

The Wi-Fi BLE device may be configured to operate based on a time-division operation between a first logical interface related to signal communication related to registration between the home appliance device and the application and a second logical interface related to signal communication between the home appliance device and the at least one first home appliance device.

The home appliance device may be connected to an access point (AP) using the access point (AP) network profile.

A maximum number of the first home appliance devices may be 4, and a maximum number of the second home appliance devices may be 3.

The information related to the number of devices to be registered may be information input through an interface of the mobile terminal.

The bridge host may be determined in ascending numerical order of received signal strength indicators (RSSI) among the plurality of home appliance devices.

The bridge guest may correspond to a home appliance device having a received signal strength indicator (RSSI) similar to the RSSI of the bridge host.

The home appliance may be one of a shoe styler, a washing machine, and a refrigerator.

The at least one first home appliance device may be registered with a server via the access point (AP), and the at least one second home appliance device may be registered with the server via the bridge host.

### [Advantageous Effects]

As is apparent from the above description, the embodiments of the present disclosure can collectively (simultaneously) register a plurality of home appliance devices through a single registration procedure. In addition, multiple home appliance devices can be prevented from being considered as stations (STAs) through grouping, thereby preventing degradation of router (or AP) performance.

### [Description of Drawings]

The accompanying drawings, which are included to provide a further understanding of the disclosure and are incorporated in and constitute a part of this application, illustrate embodiment(s) of the disclosure and together with the description serve to explain the principle of the disclosure. In the drawings:
FIG. 1 is a diagram illustrating a conventional method for registering a home appliance into a server according to the related art.
FIG. 2 is a conceptual diagram illustrating a home appliance control system for providing a home appliance control service according to an embodiment of the present disclosure.
FIG. 3 is a block diagram illustrating the home appliances shown in FIG. 2.
FIG. 4 is a flowchart illustrating a method for registering a home appliance device according to an embodiment of the present disclosure.
FIG. 5 is an example of a network configuration when a connection is completed.
FIGS. 6 and 7 are flowcharts according to an embodiment of the present disclosure.
FIG. 8 is a diagram illustrating a Wi-Fi BLE device according to an embodiment of the present disclosure.

### [Best Mode]

In various embodiments of the present disclosure, "/" and "," should be interpreted as "and/or". For example, "A/B" may mean "A and/or B". Further, "A, B" may mean "A and/or B". Further, "A/B/C" may mean "at least one of A, B and/or C". Further, "A, B, C" may mean "at least one of A, B and/or C".

In various embodiments of the present disclosure, "or" should be interpreted as "and/or". For example, "A or B" may include "only A", "only B", and/or "both A and B". In other words, "or" should be interpreted as "additionally or alternatively".

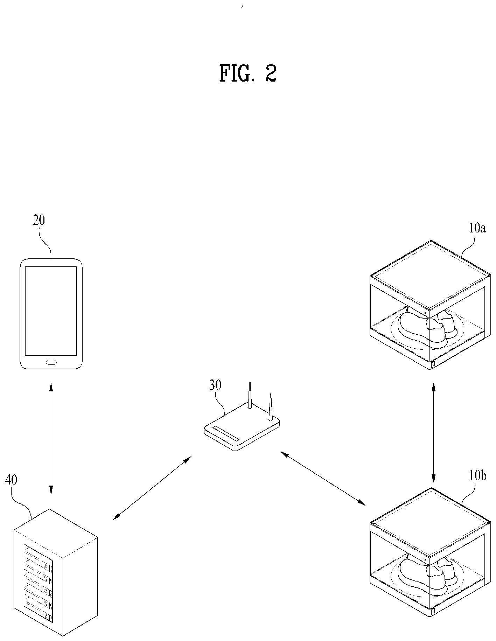

Hereinafter, a home appliance control system according to an embodiment of the present disclosure will be described with reference to FIG. 2.

FIG. 2 is a conceptual diagram illustrating a home appliance control system for providing a home appliance control service according to an embodiment of the present disclosure.

Referring to FIG. 2, the home appliance control system may correspond to a system that provides a service for remotely controlling home appliances (10a, 10b) in a home through a mobile terminal 20.

Such a home appliance control system may include at least one home appliance (10a, 10b), a mobile terminal 20, an access point (AP) 30 serving as a router, and a server 40.

At least one home appliance (10a, 10b; inclusively 10) is a device that is installed in a space such as a home and performs various operations. FIG. 2 illustrates a shoe styler as an example of at least one home appliance (10a, 10b), but the type and number of home appliances are not limited thereto.

The mobile terminal 20 may include a terminal that a user can carry while moving, such as a smartphone, a tablet computer, a smart watch, smart glasses, etc.

Meanwhile, depending on the embodiment, the home appliance control system may include not only a mobile terminal but also a fixed terminal such as a PC.

An application for using a service provided by the home appliance control system according to the embodiment of the present disclosure may be installed in the mobile terminal 20. The user may remotely control the operation of the home appliance (10a, 10b) in the home or remotely check the status of the home appliance (10a, 10b) through the application installed in the mobile terminal 20. The application may be installed on a personal computer (PC) or other home appliance as well as the mobile terminal.

Meanwhile, the user may register the home appliance (10a, 10b) with the server 40 in order to use the service provided by the home appliance control system. At this time, the user may register the home appliance (10a, 10b) with the server 40 using the mobile terminal 20.

The AP 30 serving as a router can communicate and connect the home appliance (10a, 10b) with the server 40. For example, the home appliance (10a, 10b) may include a Wi-Fi BLE (Bluetooth Low Energy) device that supports Wi-Fi wireless communication, and can be connected to the AP 30 through the Wi-Fi device. This AP 30 may correspond to a router or AP that is generally provided at home.

The server 40 is a device that provides a home appliance control service and can be managed by a manufacturer or a service provider. The server 40 may store information about each user who uses the service. For example, information about each user may include a user account, terminal information, AP (router) information, registered home appliance information, etc.

When the server 40 receives a control command for a specific home appliance (e.g., shoe styler 10b) from a mobile terminal 20, the server 40 can transmit the received control command to the shoe styler 10b through the AP 30. At this time, the shoe styler 10b may operate based on the received control command.

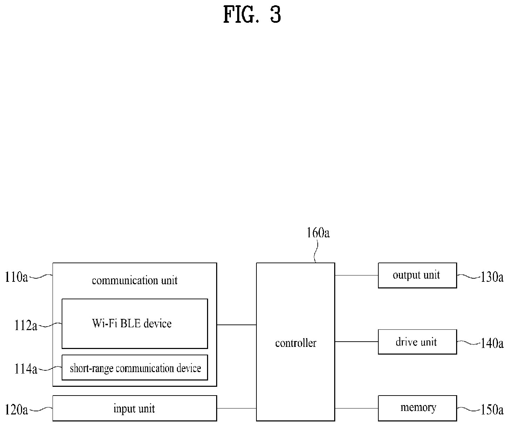

FIG. 3 is a block diagram illustrating the home appliances shown in FIG. 2.

Referring to FIG. 2, the home appliance 10a may include a communication unit 110a, an input unit 120a, an output unit 130a, a drive unit 140a, a memory 150a, and a controller 160a. However, some of the configurations of the home appliance 10a illustrated in FIG. 2 may be added or omitted depending on the type of the home appliance 10a.

The communication unit 110a may include at least one communication device for connecting the home appliance 10a to the AP (router) 30 or a pre-registered home appliance 10b. For example, the communication unit 110a may include a Wi-Fi BLE device 112a supporting Wi-Fi wireless communication, and a short-range communication device 114a such as NFC (near field communication).

The Wi-Fi BLE device 112a may operate in either an AP (router) mode or a station (STA) mode under control of the controller 160a or a microcomputer within the Wi-Fi BLE device 112a.

The AP mode may be a mode in which a connection between a peripheral device and the home appliance 10a is established by connecting another peripheral device (e.g., another peripheral home appliance, etc.) to the Wi-Fi BLE device 112a. On the other hand, the STA (station) mode may be a mode in which a connection between the home appliance 10a and the AP 30 is established by connecting the Wi-Fi BLE device 112a to the AP 30.

The input unit 120a may include at least one input means for a user to input a predetermined signal or data into the home appliance 10a. For example, the at least one input means may include a button, a dial, a touchpad, a microphone, etc.

Meanwhile, the input unit 120a may include an interface connected to a remote control device (not shown). That is, the input unit 120a may receive a control signal from the remote control device through the interface.

The output unit 130a may include an output means for informing the user of various information related to the operation of the home appliance 10a. For example, the output unit 130a may include a display or an optical output unit as a graphic or text output means, and may include a speaker or a buzzer as an audio output means.

The drive unit 140a is a configuration that performs an operation related to a function provided by the home appliance 10a, and may be different depending on the type of the home appliance 10a. For example, if the home appliance 10a is a washing machine, the drive unit 140a may include a drum motor, a water supply device, etc.

In the memory 150a, various data such as various algorithms for the operation of the home appliance 10a, control data for controlling the home appliance 10a, data for determining whether an error has occurred in the home appliance 10a, and a hidden SSID list can be stored.

The controller 160a may control the overall operation of the home appliance 10a. The controller 160a may control the drive unit 140a based on a control command or a function execution command input by the user. The controller 160a may include at least one CPU, a microcomputer, a processor, an integrated circuit (IC), etc.

Meanwhile, in order to control the home appliance 10a through the service provided by the home appliance control system of FIG. 2, the user must register information about the home appliance 10a with the server 40.

In order to register information about the home appliance 10a with the server 40, a communication connection must be established between the home appliance 10a and the server 40. To this end, the Wi-Fi BLE device 112a of the home appliance 10a can be connected to the server 40 through the AP 30 by connecting to the AP 30 serving as the router.

In order for a home appliance 10a to connect to the AP 30, the home appliance 10a must obtain information about the AP 30. Generally, a user may receive information about the AP 30 from the home appliance 10a through the mobile terminal 20.

Meanwhile, according to an embodiment of the present disclosure, the Wi-Fi BLE device 112a of the home appliance 10a may be implemented to have at least one virtual interface. Accordingly, the home appliance 10a can be connected to two devices simultaneously through the Wi-Fi BLE device 112a having at least one virtual interface.

At least one virtual interface is a virtual interface added by time-sharing one physical Wi-Fi interface, so that the Wi-Fi BLE device 112a can perform a communication function as if two physical Wi-Fi interfaces are operating through this at least one virtual interface.

Through this, the home appliance 10a can be connected to the pre-registered home appliance 10b, may acquire information about the AP 30, and may attempt to connect to the AP 30 while maintaining the connection with the pre-registered home appliance 10b.

Here, information about the AP 30 may include a service set identifier (SSID) and password of the AP 30.

Of course, the home appliance 10a may not use at least one virtual interface when attempting to connect to the AP 30. That is, the home appliance 10a may be connected to the pre-registered home appliance 10b, may obtain information about the AP 30, may terminate the connection with the pre-registered home appliance 10b, and may then attempt to connect to the AP 30.

For reference, when a connection (i.e., communication) between the home appliance 10a and the pre-registered home appliance 10b is performed, an authentication process may be performed through a certificate-based server for security. That is, the communication between the home appliance 10a and the pre-registered home appliance 10b may be performed through a secure channel (e.g., a communication channel used by the pre-registered home appliance 10b.

Based on the above-described content, the home appliance device according to one embodiment of the present disclosure may include a communication unit and the controller. The communication unit may receive an AP network profile and information related to the number of devices to be registered from a mobile terminal in which an application is installed. The controller may control at least one first home appliance device to transmit information instructing a role of a bridge host and the AP network profile, and may control at least one second home appliance device to transmit information instructing a role of a bridge guest and the bridge host network profile. The home appliance device, the first home appliance device, and the second home appliance device may all be shoe stylers. Alternatively, the home appliance device, the first home appliance device, and the second home appliance device may be home appliances such as a refrigerator and a washing machine, and may also be composed of different types of home appliances.

Here, the communication unit may include a Wi-Fi BLE (Bluetooth Low Energy) device that processes signal communication based on a BLE concurrency function among the home appliance device, the mobile terminal, the at least one first home appliance device, and the at least one second home appliance device. Specifically, the Wi-Fi BLE device included in the home appliance device may operate based on a time-division operation between a first logical interface (or virtual interface) related to signal communication related to registration between the home appliance device and the application and a second logical interface related to signal communication between the home appliance device and the at least one first home appliance device. In other words, the home appliance device and the application may transmit and receive signals through the first logical interface, and the home appliance device and the first home appliance device may transmit and receive signals through the second logical interface, and the first logical interface and the second logical interface may be used by time-dividing the physically single Wi-Fi BLE device. Likewise, the home appliance device and the second home appliance device may transmit and receive signals through a third logical interface, and the third logical interface can also be seen as using the Wi-Fi BLE device based on time division. The home appliance device performing the above function can correspond to a master device.

The above AP network profile may be used when the at least one first home appliance device is connected to the AP serving as the router, and the above bridge host network profile may be used when the at least second home appliance device is connected to the bridge host.

In addition, the controller may receive a device information request from the mobile terminal, may check the number of registerable devices, may transmit information related to the number of registerable devices and information related to the home appliance device, and may perform the authentication procedure.

The Wi-Fi BLE device may operate based on a time-division operation between a first logical interface related to signal communication related to registration between the home appliance device and the mobile terminal and a second logical interface related to signal communication between the home appliance device and the at least one first home appliance device.

The home appliance device may be connected to the AP using the AP network profile. In addition, the at least one first home appliance device may be registered with a server via the AP, and the at least one second home appliance device may be registered with the server via the bridge host.

The at least one first home appliance device may be connected to the AP using the AP network profile, and the at least one second home appliance device may be connected to the bridge host using the bridge host network profile. The above home appliance device may be connected to the AP using the AP network profile. The at least one first home appliance device can be registered with a server via the AP, and the at least one second home appliance device can be registered with the server via the bridge host.

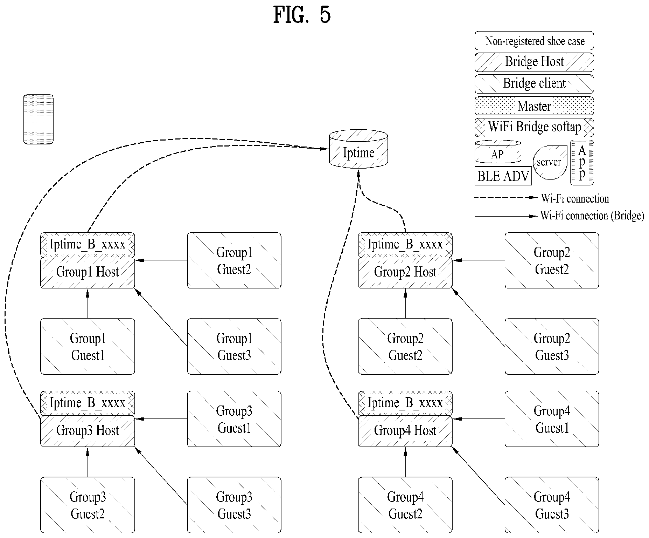

That is, it is possible to select a representative device of a bridge host by grouping four groups such that four devices can be directly connected to the AP and at the same time provide a hotspot function. As a result, the remaining devices in the group can provide network services. Here, the number of the first home appliance devices can be up to 4, and the number of the second home appliance devices can be up to 3. However, this is merely an example, and the number of devices can be expanded/changed. FIG. 5 illustrates an example of a network configuration when the connection is completed in this manner. Referring to FIG. 5, each of four bridge master devices may be connected to the AP, and three bridge guest devices may be connected to each bridge master device.

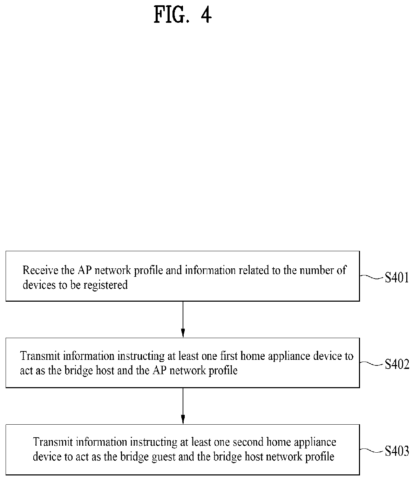

Hereinafter, a method for registering the home appliance device based on the above description will be described in detail. FIG. 4 illustrates a flowchart related to a method for registering a home appliance device according to an embodiment of the present disclosure. However, this is merely an example, and steps supported by the entire contents of the present disclosure may be added or specific steps may be excluded. In addition, the order of each step is an example, and the order of each step may be changed as needed.

Referring to FIG. 4, the home appliance device may receive information related to the AP network profile and the number of devices to be registered from the mobile terminal in which an application is installed. Information instructing at least one first home appliance device to act as a bridge host and the APr network profile can be transmitted to the at least one first home appliance device. In addition, information instructing at least one second home appliance device to act as a bridge guest and the bridge host network profile can be transmitted to the at least one second home appliance device.

Here, the Wi-Fi BLE device of the home appliance may process signal communication based on the BLE concurrency function among the home appliance device, the mobile terminal, the at least one first home appliance device, and the at least one second home appliance device.

The at least one first home appliance device may be connected to the AP using the AP network profile, and the at least one second home appliance device may be connected to the bridge host using the bridge host network profile. The home appliance device may be connected to the AP using the AP network profile. The at least one first home appliance device may be registered with the server through the AP, and the at least one second home appliance device may be registered with the server through the bridge host.

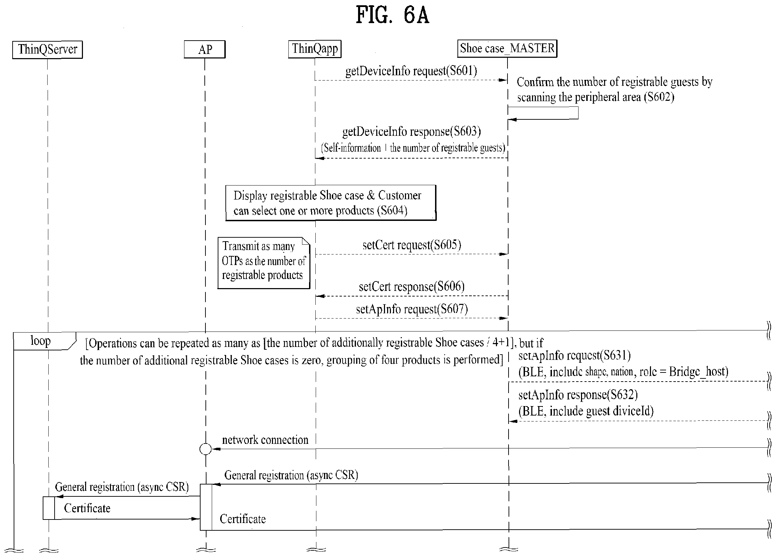

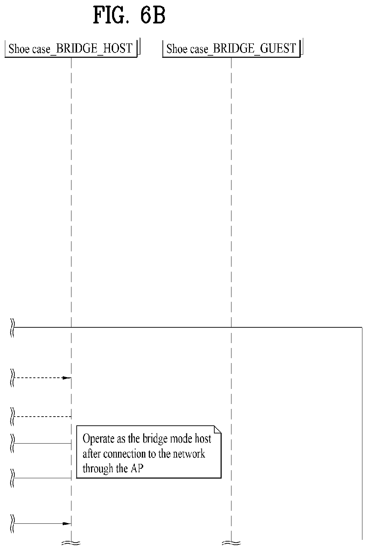

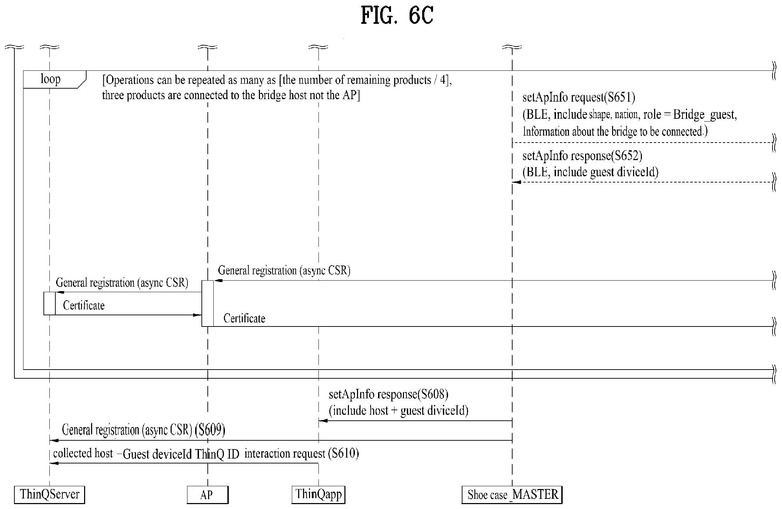

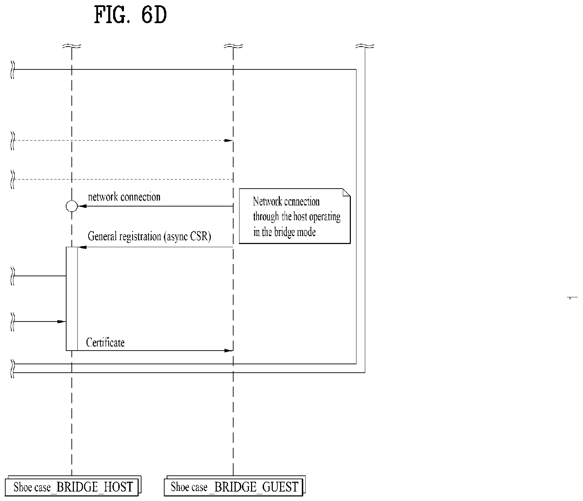

The method may further include, as illustrated in FIGS. 6A to 6D, receiving a device information request from the application (S601); checking the number of devices that can be registered (S602); transmitting information related to the number of devices that can be registered and information related to the home appliance device (S603); and performing the authentication procedure (S605 to S606). The information related to the number of devices to be registered may be information input through the interface of the user equipment (UE). In FIGS. 6A to 6D, ThinQServer may correspond to the server described above, ThinQapp may correspond to an application, SHOECASE _MASTER may correspond to a master device, SHOECASE _BRIDGE _HOST may correspond to a bridge host device, and SHOECASE _BRIDGE_GUEST may correspond to a bridge guest device.

In step S605, as described above, the master device may receive information related to the AP network profile and the number of devices to be registered from the application.

In step S631, the master device may transmit information instructing a bridge host role and the AP network profile to at least one or more first home appliance devices. Through the illustrated steps, the first home appliance device may perform registration with the AP and the server using the AP network profile.

In step S651, the master device may transmit information instructing a bridge guest role and the bridge host network profile to at least one second home appliance device. Through the illustrated process, the second home appliance device may perform registration with the bridge host using the bridge host network profile, and may perform registration with the router and the server through the bridge host.

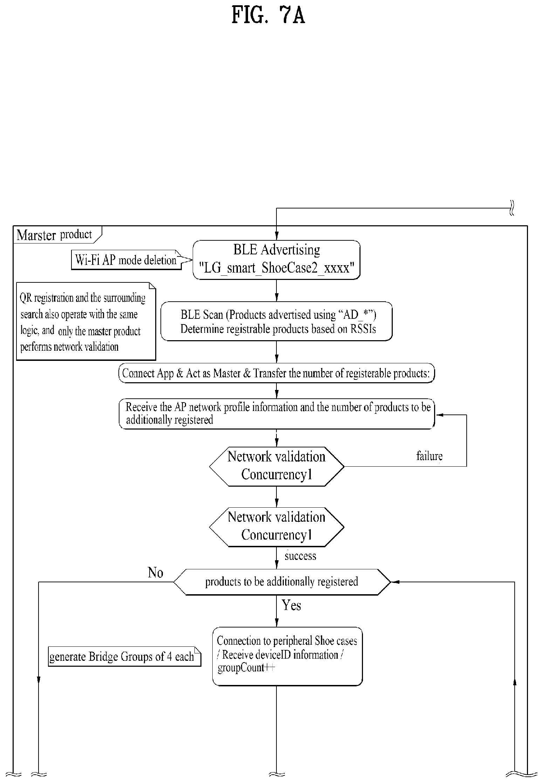

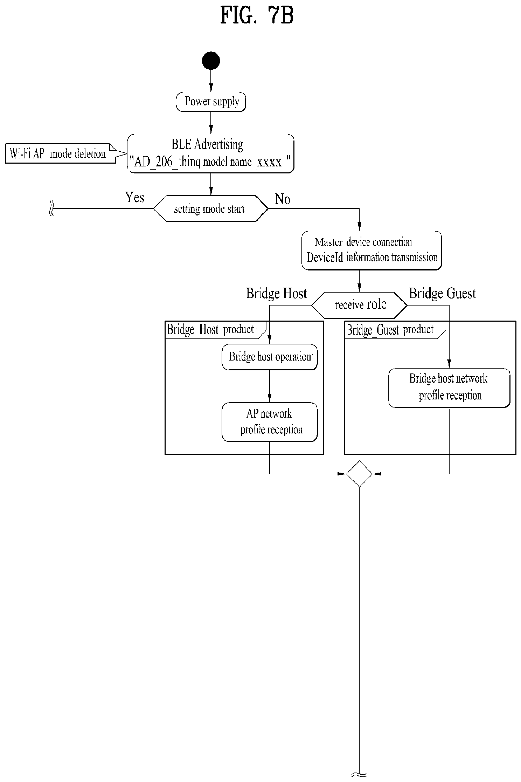

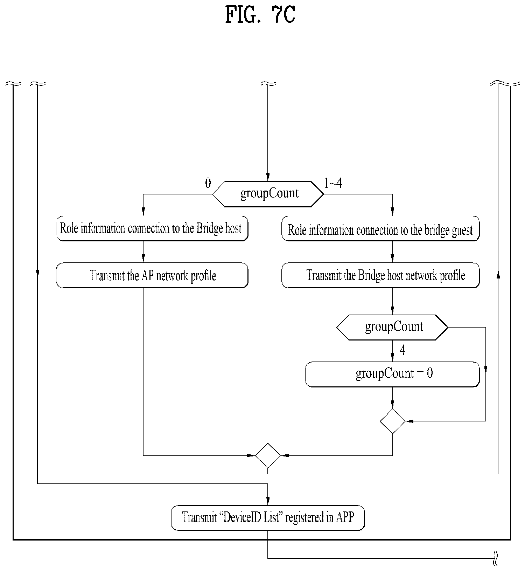

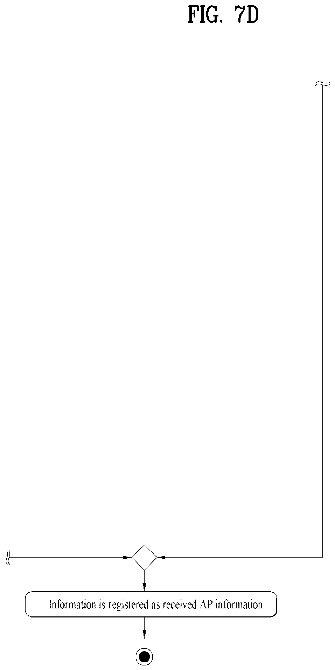

In this way, the registration procedure of the bridge host device can be performed for up to four devices, and the registration procedure of the bridge guest device can be performed for up to three devices. This repeated registration sequence will be described with reference to FIGS. 7A to 7D.

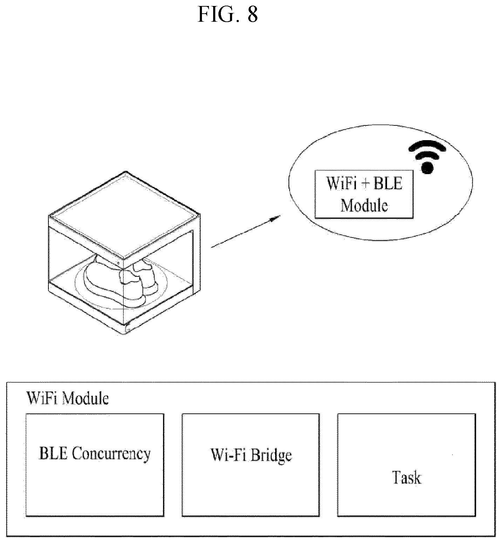

FIG. 8 illustrates the Wi-Fi BLE device according to an embodiment of the present disclosure. As described above, the Wi-Fi BLE device of FIG. 8 can process signal communication based on the BLE concurrency function among the home appliance device, the mobile terminal, the at least one first home appliance device, and the at least one second home appliance device. That is, as illustrated in FIG. 8, the Wi-Fi BLE device can communicate with a mobile phone application (App) through the BLE concurrency function and simultaneously perform inter-product communication. The Wi-Fi bridge mode means a function that operates as a Wi-Fi station and also operates in the Wi-Fi AP mode at the same time, so that other products are connected to its own AP mode and provide Internet services. The multiple product registration task refers to a task that performs network configuration through inter-product communication, etc. according to the roles of the master, the bridge host, and the bridge guest in order to register products.

The home appliance may be a home appliance including a Wi-Fi BLE device. For example, the home appliance may be one of home appliances such as a shoe styler, a washing machine, a refrigerator, etc.

### [Industrial Applicability]

The above-described embodiments of the present disclosure are applicable to various mobile communication systems.

## Claims

1. A home appliance device comprising:
a communication unit configured to receive information related to an access point (AP) network profile and information related to the number of devices to be registered from a mobile terminal in which an application is installed; and
a controller configured to transmit information instructing at least one first home appliance device to act as a bridge host and the access point (AP) network profile to the at least one first home appliance device, and to transmit information instructing at least one second home appliance device to act as a bridge guest and the bridge host network profile to the at least one second home appliance device,
wherein
the communication unit includes a Wi-Fi Bluetooth low energy (BLE) device configured to process signal communication based on a BLE concurrency function among the home appliance device, the mobile terminal, the at least one first home appliance device, and the at least one second home appliance device; and
the access point (AP) network profile is used when the at least one first home appliance device is connected to the access point (AP), and the bridge host network profile is used when the at least one second home appliance device is connected to the bridge host.

2. The home appliance device according to claim 1, wherein the controller is configured to:
receive a device information request from the mobile terminal;
check the number of registrable devices that can be registered;
transmit information related to the number of devices that can be registered and information related to the home appliance device; and
perform an authentication procedure.

3. The home appliance device according to claim 1, wherein:
the Wi-Fi BLE device is configured to operate based on a time-division operation between a first logical interface related to signal communication related to registration between the home appliance device and the application and a second logical interface related to signal communication between the home appliance device and the at least one first home appliance device.

4. The home appliance device according to claim 1, wherein:
the home appliance device is connected to an access point (AP) using the access point (AP) network profile.

5. The home appliance device according to claim 1, wherein:
a maximum number of the first home appliance devices is 4, and a maximum number of the second home appliance devices is 3.

6. The home appliance device according to claim 1, wherein:
the information related to the number of devices to be registered is information input through an interface of the mobile terminal.

7. The home appliance device according to claim 1, wherein:
the bridge host is determined in ascending numerical order of received signal strength indicators (RSSI) among the plurality of home appliance devices.

8. The home appliance device according to claim 7, wherein:
the bridge guest corresponds to a home appliance device having a received signal strength indicator (RSSI) similar to the RSSI of the bridge host.

9. The home appliance device according to claim 1, wherein:
the home appliance is one of a shoe styler, a washing machine, and a refrigerator.

10. The home appliance device according to claim 1, wherein:
the at least one first home appliance device is registered with a server via the access point (AP); and
the at least one second home appliance device is registered with the server via the bridge host.

11. A method for registering a home appliance device comprising:
receiving information related to an access point (AP) network profile and information related to the number of devices to be registered from a mobile terminal in which an application is installed; and
transmitting information instructing at least one first home appliance device to act as a bridge host and the access point (AP) network profile; and
transmit information instructing at least one second home appliance device to act as a bridge guest and the bridge host network profile to the at least one second home appliance device,
wherein
a Wi-Fi Bluetooth low energy (BLE) device of the home appliance device is configured to process signal communication based on a BLE concurrency function among the home appliance device, the mobile terminal, the at least one first home appliance device, and the at least one second home appliance device; and
the access point (AP) network profile is used when the at least one first home appliance device is connected to the access point (AP), and the bridge host network profile is used when the at least one second home appliance device is connected to the bridge host.
